# EUROPEAN PATENT APPLICATION

(11) **EP 4 571 705 A1**
(43) Date of publication of application: **18.06.2025**
(21) Application number: 24219050.2
(22) Date of filing: 11.12.2024
(51) Int. Cl.: G08G 1/0967, B60W 30/165, B60W 50/08, B60W 50/14, B60W 60/00, G05D 1/227, G05D 1/695, G05D 1/698, G08G 1/16, G08G 1/00

(54) **EXTERNAL CONTROLLED DRIVING WITHIN A GEOGRAPHICAL AREA**

(30) Priority: 12.12.2023 US 202318536488
(71) Applicant: Volvo Car Corporation, 405 31 Göteborg (SE)
(72) Inventor: LE SAUX, Matthias, 40531 Göteborg (SE); CARLSSON, Jonas, 40531 Göteborg (SE); EK BLOHM, Kristina, 40531 Göteborg (SE); TÖRMÄNEN, Mikael, 40531 Göteborg (SE)
(74) Representative: Maiwald GmbH

(57) **Abstract**

Facilitating external control driving in a geographical area by utilizing autonomous driving controlled by external device(s) is enabled. For example, a system can comprise a memory that stores computer executable components, and a processor that executes the computer executable components stored in the memory, wherein the computer executable components comprise a communication component that, using a defined vehicle communication protocol, receives a vehicle control release request and one or more vehicle control commands from an external control device upon entering a traffic control zone, and an autonomous driving component that, based vehicle control release request received, initiates transition to an external controlled driving mode to allow control of vehicle movement by the external control device.

## Description

### TECHNICAL FIELD

The disclosed subject matter relates to vehicles (e.g., transportation vehicles) and, more particularly, to autonomous traffic navigation optimization.

### BACKGROUND

In heavy traffic conditions, unpredictable stops and accelerations can occur. The cars in front (e.g., leading vehicles) can sporadically increase or decrease respective speeds. This unpredictability makes is difficult for a driver (e.g., of a trailing vehicle) to anticipate safe and efficient acceleration and/or braking. Often, as a trailing vehicle increases speed to move as the leading vehicle is accelerating, the leading vehicle can suddenly stop, causing the trailing vehicle to rapidly apply brakes (e.g., slamming the brakes). The foregoing is inefficient and can lead to an uncomfortable driving experience for occupants of the trailing vehicle.

The above-described background relating to vehicle traffic conditions is merely intended to provide a contextual overview of some current issues and is not intended to be exhaustive. Other contextual information may become further apparent upon review of the following detailed description.

### SUMMARY

The following presents a summary to provide a basic understanding of one or more embodiments of the invention. This summary is not intended to identify key or critical elements or delineate any scope of the particular embodiments or any scope of the claims. Its sole purpose is to present concepts in a simplified form as a prelude to the more detailed description that is presented later. In one or more embodiments described herein, systems, devices, computer-implemented methods, apparatuses and/or computer program products that facilitate road hazard contact mitigation are described.

As alluded to above, vehicles or corresponding vehicle systems can be improved in several ways, and various embodiments are described herein to this end and/or other ends.

According to an embodiment, a system can comprise a memory that stores computer executable components, and a processor that executes the computer executable components stored in the memory, wherein the computer executable components can comprise a communication component that, using a defined vehicle communication protocol, receives leading vehicle telemetry data applicable to a leading vehicle, wherein the leading vehicle is ahead of a trailing vehicle, and an autonomous driving component that, based on the leading vehicle telemetry data, autonomously controls movement of the trailing vehicle to follow the leading vehicle while maintaining a threshold distance between the trailing vehicle and leading vehicle.

According to another embodiment, a non-transitory machine-readable medium can comprise executable instructions that, when executed by a processor, facilitate performance of operations, comprising, using a defined vehicle communication protocol, receiving leading vehicle telemetry data applicable to a leading vehicle, wherein the leading vehicle is ahead of a trailing vehicle, and based on the leading vehicle telemetry data, autonomously controlling movement of the trailing vehicle to follow the leading vehicle while maintaining a threshold distance between the trailing vehicle and leading vehicle.

According to yet another embodiment, a method can comprise determining, by a system comprising a processor, leading vehicle telemetry data applicable to a leading vehicle, wherein the leading vehicle is ahead of a trailing vehicle, and transmitting, by the system, the leading vehicle telemetry data to the trailing vehicle, wherein the trailing vehicle is autonomously navigated based on the leading vehicle telemetry data.

### BRIEF DESCRIPTION OF DRAWINGS

FIG. 1 illustrates a block diagram of an exemplary system in accordance with one or more embodiments described herein.
FIG. 2 illustrates a block diagram of example, non-limiting computer executable components in accordance with one or more embodiments described herein.
FIG. 3 illustrates a block diagram of example, non-limiting vehicle electronic systems/devices in accordance with one or more embodiments described herein.
FIG. 4 illustrates an example, non-limiting scenario in accordance with one or more embodiments described herein.
FIG. 5 illustrates an example, non-limiting scenario in accordance with one or more embodiments described herein.
FIG. 6 illustrates an example, non-limiting scenario in accordance with one or more embodiments described herein.
FIG. 7 illustrates a block flow diagram for a process associated with autonomous traffic navigation optimization in accordance with one or more embodiments described herein.
FIG. 8A illustrates a block flow diagram for a process associated with autonomous traffic navigation optimization in accordance with one or more embodiments described herein.
FIG. 8B illustrates a block flow diagram for a process associated with autonomous traffic navigation optimization in accordance with one or more embodiments described herein.
FIG. 9 is an example, non-limiting computing environment in which one or more embodiments described herein can be implemented.
FIG. 10 is an example, non-limiting networking environment in which one or more embodiments described herein can be implemented.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

It will be understood that when an element is referred to as being "coupled" to another element, it can describe one or more different types of coupling including, but not limited to, chemical coupling, communicative coupling, capacitive coupling, electrical coupling, electromagnetic coupling, inductive coupling, operative coupling, conductive coupling, acoustic coupling, ultrasound coupling, optical coupling, physical coupling, thermal coupling, and/or another type of coupling. As referenced herein, an "entity" can comprise a human, a client, a user, a computing device, a software application, an agent, a machine learning model, an artificial intelligence, and/or another entity. It should be appreciated that such an entity can facilitate implementation of the subject disclosure in accordance with one or more embodiments the described herein.

The computer processing systems, computer-implemented methods, apparatus and/or computer program products described herein employ hardware and/or software to solve problems that are highly technical in nature (e.g., mitigate road hazard contact), that are not abstract and cannot be performed as a set of mental acts by a human.

In various embodiments herein, it can be desirable, for instance, to be able to determine the speed of a leading vehicle (e.g., to avoid hard braking and unnecessary acceleration that wastes energy). In various embodiments, a user of a vehicle herein can actuate a traffic control system herein, which can be implemented by a vehicle herein. Upon actuation, the traffic control system can initiate a vehicle-to-vehicle (V2V) communication connection with a leading vehicle, an adjacent vehicle, and/or a following vehicle (e.g., and/or a plurality of one or more of the aforementioned vehicles). Upon successful connection between vehicles, a trailing vehicle herein can mimic the acceleration and/or braking of leading vehicle, for instance, by receiving acceleration and braking data (e.g., speed data) from the leading vehicle. In various embodiments, the trailing vehicle can also transmit speed data to another trailing vehicle, thereby creating a chain of communicatively connected vehicles. In an embodiment, each vehicle can delay execution mimicking herein, for instance, to achieve a predetermined distance between an instant vehicle and a leading vehicle. In an embodiment, once the traffic is determined to have sufficiently cleared, a user of a vehicle herein can release the connection, for instance, by actuating the traffic control system to release connection with other vehicles.

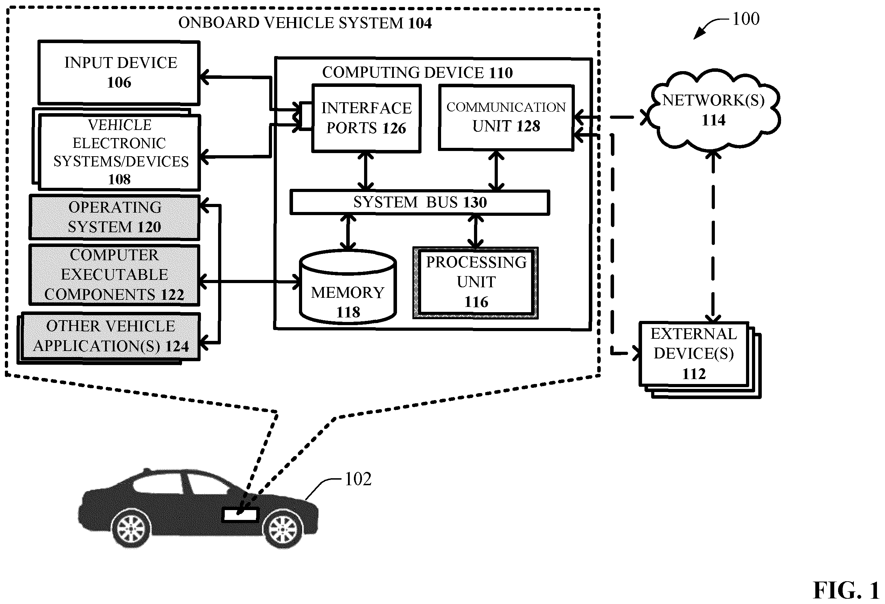

Turning now to FIG. 1, there is illustrated an example, non-limiting system 100 in accordance with one or more embodiments herein. System 100 can comprise a computerized tool, which can be configured to perform various operations relating to autonomous traffic navigation optimization. In accordance with various exemplary embodiments, system 100 can be deployed on or within a vehicle 102, (e.g., an automobile, as shown in FIG. 1). Although FIG. 1 depicts the vehicle 102 as an automobile, the architecture of the system 100 is not so limited. For instance, the system 100 described herein can be implemented with a variety of types of vehicles 102. Example vehicles 102 that can incorporate the exemplary system 100 can include, but are not limited to: automobiles (e.g., autonomous vehicles or semi-autonomous vehicles), airplanes, trains, motorcycles, carts, trucks, semi-trucks, buses, boats, recreational vehicles, helicopters, jets, electric scooters, electric bicycles, a combination thereof, and/or the like. It is additionally noted that the system 100 can be implemented in a variety of types of automobiles, such as battery electric vehicles, hybrid vehicles, plug-in hybrid vehicles, internal combustion engine vehicles, or other suitable types of vehicles.

As shown in FIG. 1, the system 100 can comprise one or more onboard vehicle systems 104, which can comprise one or more input devices 106, one or more other vehicle electronic systems and/or devices 108, and/or one or more computing devices 110. Additionally, the system 100 can comprise one or more external devices 112 that can be communicatively and/or operatively coupled to the one or more computing devices 110 of the one or more onboard vehicle systems 104 either via one or more networks 114 and/or a direct electrical connection (e.g., as shown in FIG. 1). In various embodiments, one or more of the onboard vehicle system 104, input devices 106, vehicle electronic systems and/or devices 108, computing devices 110, external devices 112, and/or networks 114 can be communicatively or operably coupled (e.g., over a bus or wireless network) to one another to perform one or more functions of the system 100.

The one or more input devices 106 can display one or more interactive graphic entity interfaces ("GUIs") that facilitate accessing and/or controlling various functions and/or application of the vehicle 102. The one or more input devices 106 can display one or more interactive GUIs that facilitate accessing and/or controlling various functions and/or applications. The one or more input devices 106 can comprise one or more computerized devices, which can include, but are not limited to: personal computers, desktop computers, laptop computers, cellular telephones (e.g., smartphones or mobile devices), computerized tablets (e.g., comprising a processor), smart watches, keyboards, touchscreens, mice, a combination thereof, and/or the like. An entity or user of the system 100 can utilize the one or more input devices 106 to input data into the system 100. Additionally, the one or more input devices 106 can comprise one or more displays that can present one or more outputs generated by the system 100 to an entity. For example, the one or more displays can include, but are not limited to: cathode tube display ("CRT"), light-emitting diode display ("LED"), electroluminescent display ("ELD"), plasma display panel ("PDP"), liquid crystal display ("LCD"), organic light-emitting diode display ("OLED"), a combination thereof, and/or the like.

For example, the one or more input devices 106 can comprise a touchscreen that can present one or more graphical touch controls that can respectively correspond to a control for a function of the vehicle 102, an application, a function of the application, interactive data, a hyperlink to data, and the like, wherein selection and/or interaction with the graphical touch control via touch activates the corresponding functionality. For instance, one or more GUIs displayed on the one or more input devices 106 can include selectable graphical elements, such as buttons or bars corresponding to a vehicle navigation application, a media application, a phone application, a back-up camera function, a car settings function, a parking assist function, and/or the like. In some implementations, selection of a button or bar corresponding to an application or function can result in the generation of a new window or GUI comprising additional selectable icons or widgets associated with the selected application. For example, selection of one or more selectable options herein can result in generation of a new GUI or window that includes additional buttons or widgets with one or more selectable options. The type and appearance of the controls can vary. For example, the graphical touch controls can include icons, symbols, widgets, windows, tabs, text, images, a combination thereof, and/or the like.

The one or more input devices 106 can comprise suitable hardware that registers input events in response to touch (e.g., by a finger, stylus, gloved hand, pen, etc.). In some implementations, the one or more input devices 106 can detect the position of an object (e.g., by a finger, stylus, gloved hand, pen, etc.) over the one or more input devices 106 within close proximity (e.g., a few centimeters) to touchscreen without the object touching the screen. As used herein, unless otherwise specified, reference to "on the touchscreen" refers to contact between an object (e.g., an entity's finger) and the one or more input devices 106 while reference to "over the touchscreen" refers to positioning of an object within close proximity to the touchscreen (e.g., a defined distance away from the touchscreen) yet not contacting the touchscreen.

The type of the input devices 106 can vary and can include, but is not limited to: a resistive touchscreen, a surface capacitive touchscreen, a projected capacitive touchscreen, a surface acoustic wave touchscreen, and an infrared touchscreen. In various embodiments, the one or more input devices 106 can be positioned on the dashboard of the vehicle 102, such as on or within the center stack or center console of the dashboard. However, the position of the one or more input devices 106 within the vehicle 102 can vary.

The one or more other vehicle electronic systems and/or devices 108 can include one or more additional devices and/or systems (e.g., in addition to the one or more input devices 106 and/or computing devices 110) of the vehicle 102 that can be controlled based at least in part on commands issued by the one or more computing devices 110 (e.g., via one or more processing units 116) and/or commands issued by the one or more external devices 112 communicatively coupled thereto. For example, the one or more other vehicle electronic systems and/or devices 108 can comprise: seat motors, seatbelt system(s), airbag system(s), display(s), infotainment system(s), speaker(s), a media system (e.g., audio and/or video), a back-up camera system, a heating, ventilation, and air conditioning ("HVAC") system, a lighting system, a cruise control system, a power locking system, a navigation system, an autonomous driving system, a vehicle sensor system, telecommunications system, a combination thereof, and/or the like. Other example other vehicle electronic systems and/or devices 108 can comprise one or more sensors, which can comprise distance sensors, seats, seat position sensor(s), collision sensor(s), odometers, altimeters, speedometers, accelerometers, engine features and/or components, fuel meters, flow meters, cameras (e.g., digital cameras, heat cameras, infrared cameras, and/or the like), lasers, radar systems, lidar systems, microphones, vibration meters, moisture sensors, thermometers, seatbelt sensors, wheel speed sensors, a combination thereof, and/or the like. For instance, a speedometer of the vehicle 102 can detect the vehicle's 102 traveling speed. Further, the one or more sensors can detect and/or measure one or more conditions outside the vehicle 102, such as: whether the vehicle 102 is traveling through a rainy environment, whether the vehicle 102 is traveling through winter conditions (e.g., snowy and/or icy conditions), whether the vehicle 102 is traveling through very hot conditions (e.g., desert conditions), and/or the like. Example navigational information can include, but is not limited to: the destination of the vehicle 102, the position of the vehicle 102, the type of vehicle 102, the speed of the vehicle 102, environmental conditions surrounding the vehicle 102, the planned route of the vehicle 102, traffic conditions expected to be encountered by the vehicle 102, operational status of the vehicle 102, a combination thereof, and/or the like.

The one or more computing devices 110 can facilitate executing and controlling one or more operations of the vehicle 102, including one or more operations of the one or more input devices 106, and the one or more other vehicle electronic systems/devices 108 using machine-executable instructions. In this regard, embodiments of system 100 and other systems described herein can include one or more machine-executable components embodied within one or more machines (e.g., embodied in one or more computer readable storage media associated with one or more machines, such as computing device 110). Such components, when executed by the one or more machines (e.g., processors, computers, virtual machines, etc.) can cause the one or more machines to perform the operations described.

For example, the one or more computing devices 110 can include or be operatively coupled to at least one memory 118 and/or at least one processing unit 116. The one or more processing units 116 can be any of various available processors. For example, dual microprocessors and other multiprocessor architectures also can be employed as the processing unit 116. In various embodiments, the at least one memory 118 can store software instructions embodied as functions and/or applications that when executed by the at least one processing unit 116, facilitate performance of operations defined by the software instruction. In the embodiment shown, these software instructions can include one or more operating system 120, one or more computer executable components 122, and/or one or more other vehicle applications 124. For example, the one or more operating systems 120 can act to control and/or allocate resources of the one or more computing devices 110. It is to be appreciated that the claimed subject matter can be implemented with various operating systems or combinations of operating systems.

The one or more computer executable components 122 and/or the one or more other vehicle applications 124 can take advantage of the management of resources by the one or more operating systems 120 through program modules and program data also stored in the one or more memories 118. The one or more computer executable components 122 can provide various features and/or functionalities that can facilitate prevention of pedestrian accidents herein. Example, other vehicle applications 124 can include, but are not limited to: a navigation application, a media player application, a phone application, a vehicle settings application, a parking assistance application, an emergency roadside assistance application, a combination thereof, and/or the like. The features and functionalities of the one or more computer executable components 122 are discussed in greater detail infra.

The one or more computing devices 110 can further include one or more interface ports 126, one or more communication units 128, and a system bus 130 that can communicatively couple the various features of the one or more computing devices 110 (e.g., the one or more interface ports 126, the one or more communication units 128, the one or more memories 118, and/or the one or more processing units 116). The one or more interface ports 126 can connect the one or more input devices 106 (and other potential devices) and the one or more other vehicle electronic systems/devices 108 to the one or more computing devices 110. For example, the one or more interface ports 126 can include, a serial port, a parallel port, a game port, a universal serial bus ("USB") and the like.

The one or more communication units 128 can include suitable hardware and/or software that can facilitate connecting one or more external devices 112 to the one or more computing devices 110 (e.g., via a wireless connection and/or a wired connection). For example, the one or more communication units 128 can be operatively coupled to the one or more external devices 112 via one or more networks 114. The one or more networks 114 can include wired and/or wireless networks, including but not limited to, a personal area network ("PAN"), a local area network ("LAN"), a cellular network, a wide area network ("WAN", e.g., the Internet), and the like. For example, the one or more external devices 112 can communicate with the one or more computing devices 110 (and vice versa) using virtually any desired wired or wireless technology, including but not limited to: wireless fidelity ("Wi-Fi"), global system for mobile communications ("GSM"), universal mobile telecommunications system ("UMTS"), worldwide interoperability for microwave access ("WiMAX"), enhanced general packet radio service (enhanced "GPRS"), fifth generation ("5G") communication system, sixth generation ("6G") communication system, third generation partnership project ("3GPP") long term evolution ("LTE"), third generation partnership project 2 ("3GPP2") ultra- mobile broadband ("UMB"), high speed packet access ("HSPA"), Zigbee and other 802.XX wireless technologies and/or legacy telecommunication technologies, near field communication ("NFC") technology, BLUETOOTH^{®}, Session Initiation Protocol ("SIP"), ZIGBEE^{®}, RF4CE protocol, WirelessHART protocol, 6LoWPAN (IPv6 over Low power Wireless Area Networks), Z-Wave, an ANT, an ultra-wideband ("UWB") standard protocol, and/or other proprietary and non-proprietary communication protocols. In this regard, the one or more communication units 128 can include software, hardware, or a combination of software and hardware that is configured to facilitate wired and/or wireless communication between the one or more computing devices 110 and the one or more external devices 112. While the one or more communication units 128 are shown for illustrative clarity as a separate unit that is not stored within memory 118, it is to be appreciated that one or more (software) components of the communication unit can be stored in memory 118 and include computer executable components.

The one or more external devices 112 can include any suitable computing device comprising a display and input device (e.g., a touchscreen) that can communicate with the one or more computing devices 110 comprised within the onboard vehicle system 104 and interface with the one or more computer executable components 122 (e.g., using a suitable application program interface ("API")). For example, the one or more external devices 112 can include, but are not limited to: a mobile phone, a smartphone, a tablet, a personal computer ("PC"), a digital assistant ("PDA"), a heads-up display ("HUD"), virtual reality ("VR") headset, an augmented reality ("AR") headset, or another type of wearable computing device, a desktop computer, a laptop computer, a computer tablet, a combination thereof, and the like.

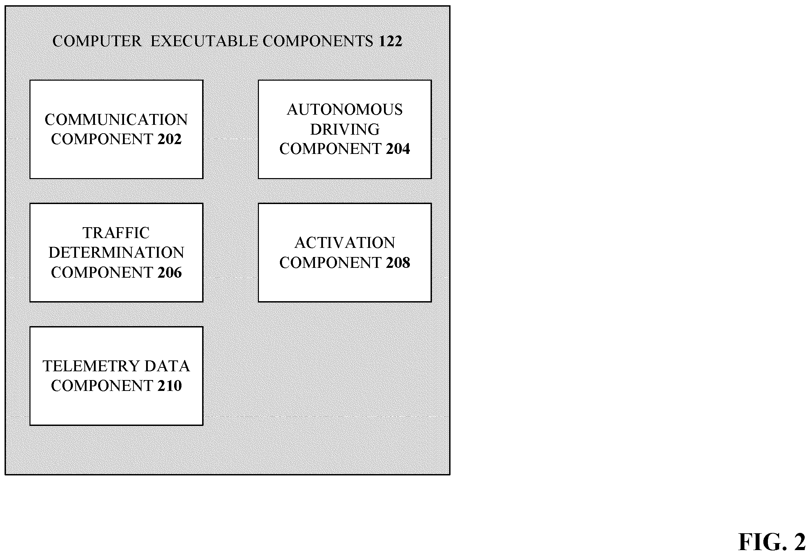

FIG. 2 illustrates a block diagram of example, non-limiting computer executable components 122 that can facilitate autonomous traffic navigation optimization in accordance with one or more embodiments described herein. Repetitive description of like elements employed in other embodiments described herein is omitted for sake of brevity. As shown in FIG. 2, the one or more computer executable components 122 can comprise communication component 202, autonomous driving component 204, traffic determination component 206, activation component 208, telemetry data component 210, and/or external controlled driving component (not shown).

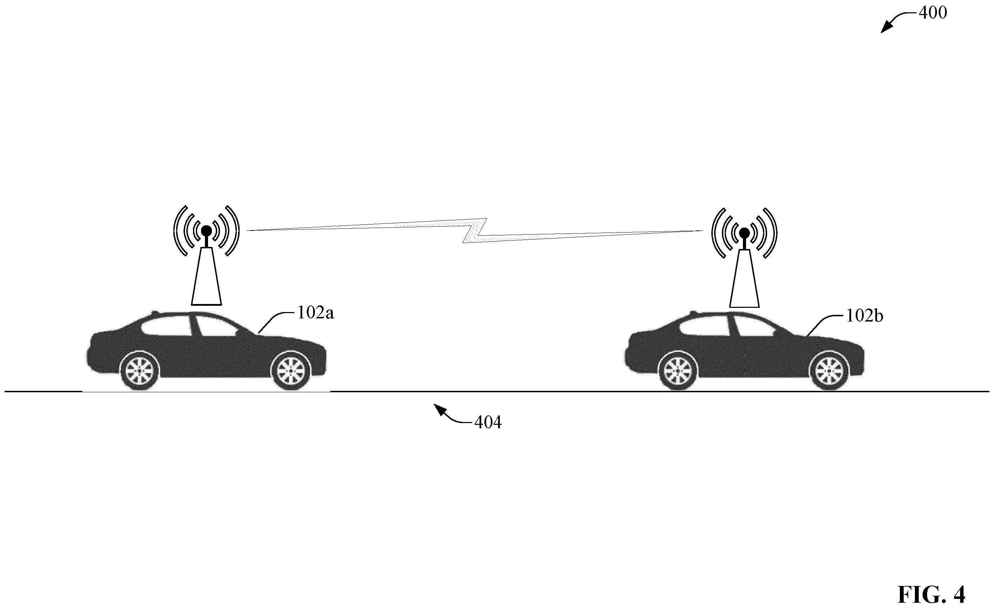

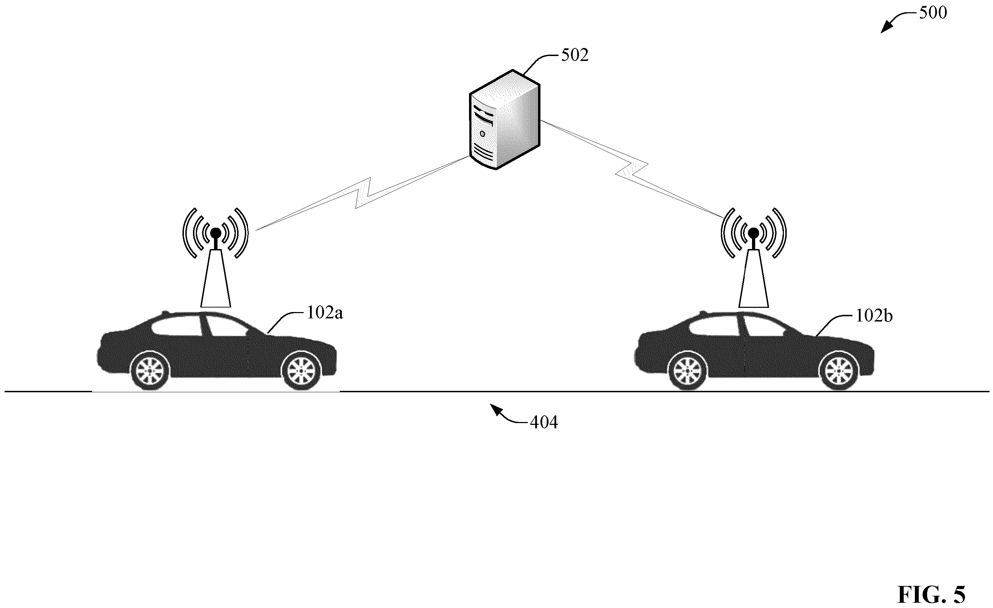

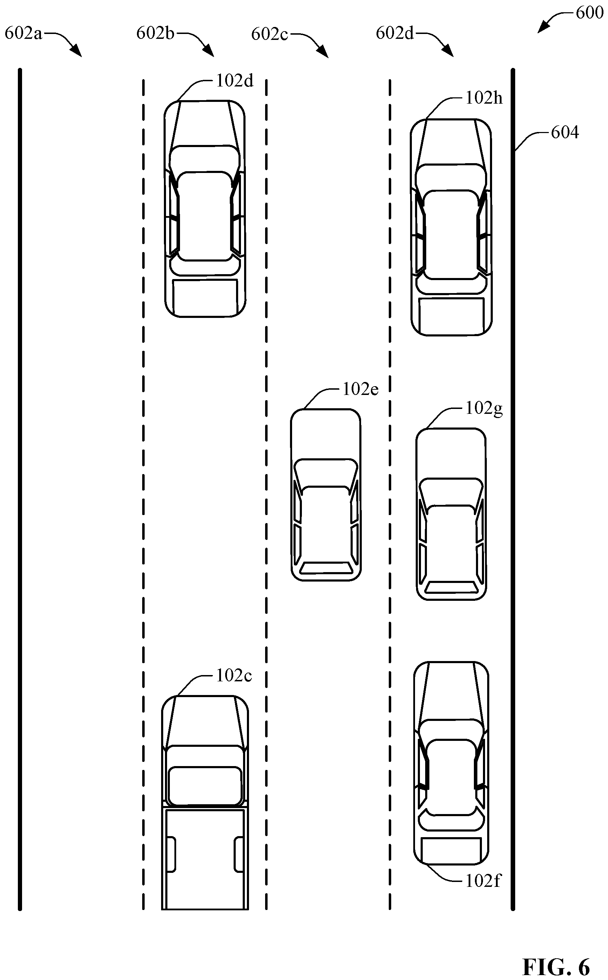

According to an embodiment, the communication component 202 can, using a defined vehicle communication protocol, receive leading vehicle telemetry data applicable to a leading vehicle (e.g., vehicle 102b). In this regard, the leading vehicle (e.g., vehicle 102b) can be ahead of a trailing vehicle (e.g., vehicle 102a). For example, as depicted in FIG. 4, a leading vehicle 102b can communicate with a trailing vehicle 102a while traveling along a road (e.g., or highway) 404. In various embodiments, the vehicles 102 can utilize a vehicle-to-vehicle (V2V) protocol, which can enable direct communication between vehicles 102. In various embodiments, the V2V protocol can comprise one or more of IEEE 802.11p dedicated short-range communications (DSRC), cellular V2X, IEEE 802.11p ITS-G5, or other suitable V2V protocols. In further embodiments, as depicted in FIG. 5, a vehicle-to-everything (e.g., V2E or V2X) protocol can be utilized for communication between the vehicles 102, in which an intermediate server 502 between the vehicles 102 can be utilized to relay data between the vehicles 102. Additionally, it is noted that, as depicted scenario 600 of FIG. 6, vehicle 102d can be a leading vehicle with respect to vehicle 102c. Similarly, vehicle 102g can be a first leading vehicle with respect to vehicle 102f, and vehicle 102h can be a second leading vehicle with respect to vehicle 102f. In this regard, vehicle 102h can be a leading vehicle with respect to vehicle 102g. Further, vehicle 102e, traveling in lane 602c, can be an adjacent vehicle, adjacent to vehicles traveling in lanes 602b or 602d. On highway 604, as depicted in FIG. 6, lane 602a can be empty, though this is purely an example and lane 602a is not so limited.

It is noted that vehicle communication protocol may comprise various items/fields, vehicle identification, speed data, sensor data, location data, distance to everything data, connecting vehicle data (e.g., vehicle identification of connecting vehicle or other vehicles in proximity). The communication protocol also comprises one or more vehicle control commands (e.g., a command to move forward, a command to slow down, a command to turn right/left and a degree of turns, a stop command, etc.). For example, the infrastructure system may transmit a move forward command, 5 mph, turn 0 to 15 degrees, duration of turn, turn to 0 degree (e.g., steering at center or go straight). Each item or field comprise number of bits or packets containing series of bits. For example, 4 bits may be used to represent vehicle identification and 5 bits may be used for each vehicle control commands.

In an aspect, the external controlled driving component, extracts one or more vehicle commands from the vehicle communication protocol. Upon determining the type of command received, move forward command, 5 mph, turn 0 to 15 degrees, duration of turn, turn to 0 degree, etc., the external controlled driving component executes (e.g., carries out the command using various components 122), each command sequentially or in parallel.

It is noted that vehicle telemetry data herein can comprise acceleration data (e.g., applicable to a leading vehicle or another suitable vehicle), braking data (e.g., applicable to a leading vehicle or another suitable vehicle), or other suitable telemetry data such as vehicle speed, engine RPM, fuel level, battery charge level, engine/motor temperature, odometer reading, fuel/energy consumption rate, oil pressure, tire pressure, brake status, airbag deployment information, GPS location, acceleration and deceleration data, throttle position, engine trouble codes (DTCs), transmission gear, light or wiper status, cruise control status, automated driving status, vehicle door or window status, emissions data, etc. It is noted that the communication component 202 can comprise the hardware required to implement a variety of communication protocols (e.g., infrared ("IR"), shortwave transmission, near-field communication ("NFC"), Bluetooth, Wi-Fi, long-term evolution ("LTE"), 3G, 4G, 5G, 6G, global system for mobile communications ("GSM"), code-division multiple access ("CDMA"), satellite, visual cues, radio waves, etc.)

According to an embodiment, the autonomous driving component 204 can, based on the leading vehicle telemetry data, autonomously control movement of a trailing vehicle (e.g., vehicle 102c) to follow a leading vehicle (e.g., vehicle 102d) while maintaining a threshold distance (e.g., a gap) between the trailing vehicle (e.g., vehicle 102c) and leading vehicle (e.g., vehicle 102d). The foregoing enables increased efficiency and comfort, as unnecessary braking and/or acceleration can be mitigated or eliminated, and can lead to a more comfortable driving experience for a driver or passenger of the vehicle 102c. To maintain this gap or threshold distance, the communication component 202 (e.g., of vehicle 102c) can transmit trailing vehicle telemetry data, applicable to a trailing vehicle (e.g., vehicle 102c), to an adjacent vehicle (e.g., vehicle 102e) traveling in a lane (e.g., lane 602c) adjacent to a lane (e.g., lane 602b) applicable to the trailing vehicle (e.g., vehicle 102c). In this regard, the trailing vehicle telemetry data can comprise an instruction, to the adjacent vehicle (e.g., vehicle 102c), not to merge (e.g., into the lane 602b) into a gap between the leading vehicle (e.g., vehicle 102d) and the trailing vehicle (e.g., vehicle 102c). The trailing vehicle 102c can transmit (e.g., via the communication component 202) this instruction, for instance, so that the vehicle 102c can maintain (e.g., via the autonomous driving component 204) a defined gap between itself and the leading vehicle 102d to maintain smooth following of the vehicle 102d without rapid accelerations or decelerations, which could be interrupted if the vehicle 102e enters the gap (e.g., in lane 602b) between the vehicle 102d and the vehicle 102c. In various embodiments, if the vehicle 102e intends to merge into the lane 602b, then a communication component 202 of the vehicle 102e can communicate this intention to the vehicles 102d and 102c, so that the vehicle 102c can enlarge the gap between the vehicle 102c and the vehicle 102d, for instance, in order to enable the vehicle 102e to merge into the lane 602b without significant resultant acceleration or deceleration experienced by the vehicle 102c.

In various embodiments, the autonomous driving component 204 can delay the movement of the trailing vehicle (e.g., vehicle 102c) by a defined amount of time. The foregoing can enable the vehicle 102c to achieve a defined distance (e.g., a gap) between the vehicle 102c and the vehicle 102d. In various embodiments, autonomously controlling (e.g., via the autonomous driving component 204) movement of the trailing vehicle (e.g., vehicle 102c) to follow the leading vehicle (e.g., vehicle 102d) can comprise mimicking (e.g., by the vehicle 102c) acceleration and braking of the leading vehicle (e.g., vehicle 102d). In various embodiments, autonomously controlling (e.g., via the autonomous driving component 204) the movement of the trailing vehicle (e.g., vehicle 102c) to follow the leading vehicle (e.g., vehicle 102d) can comprise autonomously controlling (e.g., via the autonomous driving component 204) the movement of the trailing vehicle (e.g., vehicle 102c) to follow the leading vehicle (e.g., vehicle 102d) while preventing a threshold acceleration or deceleration of the trailing vehicle (e.g., vehicle 102c). The foregoing can promote smoothness of operation of the vehicle 102c, which can enable a more comfortable driving experience for a driver or passenger of the vehicle 102c. In further embodiments, autonomously controlling (e.g., via the autonomous driving component 204) the movement of the trailing vehicle (e.g., vehicle 102c) to follow the leading vehicle (e.g., vehicle 102d) can comprise autonomously controlling the movement of the trailing vehicle (e.g., vehicle 102c) to follow the leading vehicle (e.g., vehicle 102d) while preventing a threshold jerk of the trailing vehicle (e.g., vehicle 102c). The foregoing can promote smoothness of operation of the vehicle 102c, which can enable a more comfortable driving experience for a driver or passenger of the vehicle 102c.

In various embodiments, a leading vehicle (e.g., vehicle 102g) can be a first leading vehicle, a second leading vehicle (e.g., vehicle 102h) can be ahead of the first leading vehicle (e.g., vehicle 102g), and the autonomous driving component 204 can further autonomously control the movement of a trailing vehicle (e.g., vehicle 102f) to follow the leading vehicle (e.g., vehicle 102g) based on second leading vehicle telemetry data received from the second leading vehicle (e.g., vehicle 102h). In this regard, the autonomous driving component 204 of the vehicle 102f can anticipate an action of the vehicle 102g based on data received from the vehicle 102h, and modify a speed of the vehicle 102f to account for the anticipated action of the vehicle 102g. For example, if the vehicle 102h communicates to the vehicle 102f that the vehicle 102h is applying its brakes, the autonomous driving component 204 of the vehicle 102f can anticipate that the vehicle 102g will also apply its respective brakes, and accordingly reduce a speed of the vehicle 102f. Similarly, if the vehicle 102h communicates to the vehicle 102f that the vehicle 102h is accelerating, the autonomous driving component 204 of the vehicle 102f can anticipate that the vehicle 102g will also accelerate, and accordingly increase (e.g., with a defined time delay) a speed of the vehicle 102f.

In various embodiments, the autonomous driving component 204 autonomously control the movement of a trailing vehicle herein in response to a defined activation criterion being determined to be satisfied (e.g., via the activation component 208). In one or more embodiments, the defined activation criterion can comprise an input from a user of the trailing vehicle via a user interface (e.g., input device 106) of the trailing vehicle. For example, a user of a vehicle 102 herein can enable an autonomous traffic navigation optimization mode via a screen, button, instruction, etc. via the input device 106 of the vehicle 102. In further embodiments, the defined activation criterion can comprise satisfaction of a defined traffic congestion criterion. For example, the traffic determination component 206 can determine traffic conditions applicable to a road 404 or highway 604. The traffic determination component 206 (e.g., of a vehicle 102 herein) can determine such traffic conditions using GPS data, real-time traffic data (e.g., retrieved via the communication component 202), traffic information sharing (e.g., via the communication component 202), user feedback, or via other suitable traffic determination protocols. Suitable defined traffic congestion criteria herein can be based on travel time index (TTI), congestion index, vehicle hours of delay (VHD), person hours of delay (PHD), average speed, level of service (LOS), traffic volume to capacity ratio (V/C ratio), peak hour volume, queue length, congestion cost, emission levels, lane occupancy data, bottleneck identification, or other suitable traffic congestion criteria. If the defined traffic condition is determined to be satisfied (e.g., via the traffic determination component 206), then the activation component 208 can enable an autonomous traffic navigation optimization mode herein. In various embodiments, the autonomous driving component 204 can autonomously stop controlling the movement of the trailing vehicle in response to a defined deactivation criterion being determined to be satisfied (e.g., via the activation component 208). For example, a user of a vehicle 102 herein can disable an autonomous traffic navigation optimization mode via a screen, button, instruction, etc. via the input device 106 of the vehicle 102. In further embodiments, the activation component 208 can disable an autonomous traffic navigation optimization mode herein if the defined traffic condition is determined to fall below a defined threshold level (e.g., via the traffic determination component 206) according to the defined traffic congestion criterion.

According to an embodiment, the telemetry data component 210 (e.g., of a vehicle 102b) can determine leading vehicle telemetry data applicable to a leading vehicle (e.g., vehicle 102b). In this regard, the leading vehicle (e.g., vehicle 102b) can be ahead of a trailing vehicle (e.g., vehicle 102a). The communication component 202 (e.g., of the vehicle 102b) can then transmit the leading vehicle telemetry data to the trailing vehicle (e.g., vehicle 102a). In this regard, the trailing vehicle (e.g., vehicle 102a) can be autonomously navigated (via its respective autonomous driving component 204) based on the leading vehicle telemetry data. In various embodiments, the leading vehicle telemetry data can comprise acceleration data applicable to the leading vehicle (e.g., vehicle 102b). In further embodiments, the leading vehicle telemetry data can comprise braking data applicable to the leading vehicle (e.g., vehicle 102b). Other suitable telemetry data can comprise one or more of vehicle speed, engine RPM, fuel level, battery charge level, engine/motor temperature, odometer reading, fuel/energy consumption rate, oil pressure, tire pressure, brake status, airbag deployment information, GPS location, acceleration and deceleration data, throttle position, engine trouble codes (DTCs), transmission gear, light or wiper status, cruise control status, automated driving status, vehicle door or window status, emissions data, etc.

In an aspect, an infrastructure system comprises various components described above (e.g., FIG 2) is provided to facilitate external control of one more vehicle wherein when a car enters a heavy traffic zone (e.g., inside geographical zone - downtown, school zone, during certain time zone, or both), the vehicle driver is asked to release control of the car. Thereafter, the infrastructure system can control all cars to maintain certain speed and distance to efficiently move the cars during heavy traffic. For example, when car enters a school zone, the infrastructure system connects to the cars and initiates control of speed. The infrastructure system can use cars sensors to maintain distance between cars, can initiate a connection between cars having V2X capabilities to allow all car connected to a front car to mimic speed control. It should be noted that when a car not having sensors or communication capabilities, the other cars and increase the sensitivity of its own sensors to maintain a safe distance. Using various communication methods and protocols, the vehicle can receive message from the infrastructure (e.g., external device(s)) which get processed by the system components described below to control the vehicle to avoid accidents or contacts with other items within proximity of the vehicle. The driver would simply accept the control and the infrastructure would navigate the vehicle through traffic by sending appropriate commands.

In another aspect, a various auto assist zones are setup at specified geographical locations, wherein an infrastructure system is provided such that when a vehicle enters the auto assist zone, the vehicle transmits a message comprising various information about the car (e.g., vehicle identification, number of passengers, an approval to participate in the assisted driving mode, location information, etc.). Upon receiving the message, the infrastructure system can determine a path the vehicle will take, speed, estimated time to exist the zone, etc. In addition, if the infrastructure system determines that a V2V connection or access to the vehicle sensors is needed, the infrastructure system will transmit a vehicle request message to request and/or retrieve sensor data from the vehicle. In an aspect, a standardize message is transmitted by the vehicle, regardless or make or model, that packages a vehicle data response message comprising sensor data and various other data. Furthermore, the control of the vehicle is provided to the infrastructure system. Based on the determined path for the vehicle, determined speed, and data received from the vehicle, the infrastructure system transmits commands, through use of one or more vehicle control commands, to the vehicle to move forward and steering vector information so that the vehicle travels according to determined path and at designated speed. In the event, another vehicle enters the area that could alter the determined path or speed, the infrastructure system recalculates new path and speed and transmit vehicle control commands accordingly. For example, a first path is selected for first vehicle. Thereafter, a second vehicle enters the area. The infrastructure system determines a path for the second vehicle, a second path. If the second path interferes with first path, the system determines an alternate path for the first vehicle and/or the second vehicle to ensure that both vehicles exist the area as quickly as possible. In an area where there would be vehicles not capable of joining the assisted drive (e.g., technology not available in the vehicle) or selected not to participate in the assisted drive (e.g., non-participating vehicle A), the infrastructure system utilizes vehicle sensors to adjust the speed and path to ensure no collision occurs while the vehicle is under the control of the infrastructure system. In addition, if a V2V communication possible with the non-participating vehicle, the system will request participating vehicles to establish communication between the participating vehicle (e.g., the first vehicle) and the one or more non-participating vehicle (e.g., non-participating vehicle A).

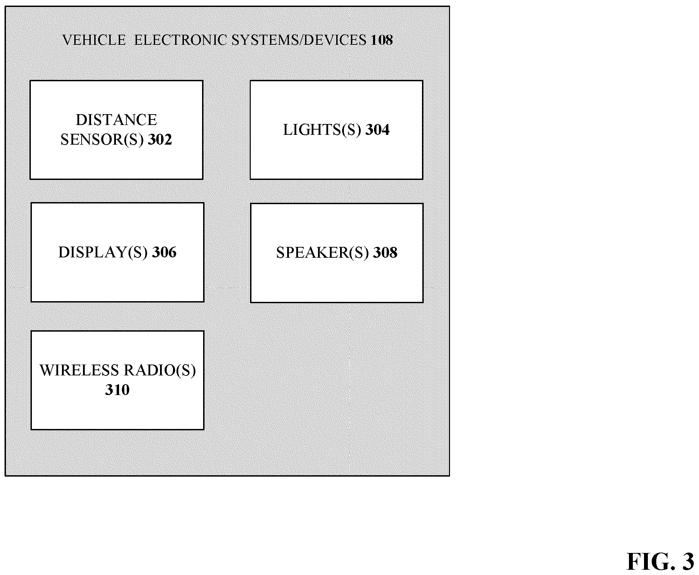

FIG. 3 illustrates a block diagram of example, non-limiting vehicle electronic systems/devices 108 in accordance with one or more embodiments described herein. Repetitive description of like elements employed in other embodiments described herein is omitted for sake of brevity. In various embodiments, the vehicle electronic systems/devices 108 can comprise one or more of distance sensors 302 (e.g., sensors external or internal to the vehicle 102 that are arranged to detect distance between the vehicle 102 and other objects (e.g., other vehicles, pedestrians, etc.) and/or to determine potential collisions, such as one or more of a lidar sensor, a radar sensor, an ultrasonic sensor, an infrared sensor, a laser sensor, a light emitting diode (LED) sensor, a capacitive sensor, a time of flight sensor, a hall effect sensor, or an optical sensor, or another suitable sensors), light(s) 304, display(s) 306 (e.g., infotainment devices, touchscreen displays, etc.), speaker(s) 308, and/or wireless radio(s) 310.

FIGs. 4-6 illustrate an example, non-limiting scenarios in accordance with various embodiments described herein. In some embodiments, such scenarios can comprise a series of events or steps, however, the scenarios are presented in a non-limiting sequence and/or one or more steps or scenarios can be added, duplicated, omitted, etc. It is noted that, in FIGs. 4-6, any of the vehicles 102a-102h can be similar to the vehicle 102 (e.g., and comprise like components), and can comprise respective onboard vehicles systems 104.

In scenario 400 of FIG. 4, exemplary V2V communication between a vehicle 102a and vehicle 102b is depicted. While traveling on the road 404, the vehicle 102b (e.g., a leading vehicle) can transmit telemetry data, applicable to the vehicle 102a, to the vehicle 102a. If the vehicle 102a comprises V2V or V2E, the telemetry data can be transmitted (e.g., via the communication component 202 directly from the vehicle 102b to the vehicle 102a. In various embodiments, the telemetry data can be transmitted by the communication component 202, for instance, using a short range communication, such as Bluetooth, ultrawideband or millimeter wave signal, Wi-Fi, or another suitable short range signal. In scenario 500 of FIG. 5, exemplary V2E communication is depicted. While traveling on the road 404, the vehicle 102b (e.g., a leading vehicle) can transmit telemetry data, applicable to the vehicle 102a, to the vehicle 102a. The vehicle 102b can transmit the telemetry data to server 502, which can then relay or communicate the telemetry data the vehicle 102a. In various embodiments, the telemetry data can be transmitted by the communication component 202, for instance, using a 4G wireless connection, 5G wireless connection, 6G wireless connection, or another suitable wireless connection.

Scenario 600 of FIG. 6 depicts an exemplary highway 604, on which a plurality of vehicles 102 can be traveling. For instance, vehicle 102d can be a leading vehicle with respect to vehicle 102c. Similarly, vehicle 102g can be a first leading vehicle with respect to vehicle 102f, and vehicle 102h can be a second leading vehicle with respect to vehicle 102f. In this regard, vehicle 102h can be a leading vehicle with respect to vehicle 102g. Further, vehicle 102e, traveling in lane 602c, can be an adjacent vehicle, adjacent to vehicles traveling in lane 602b or 602d. On highway 604, as depicted in FIG. 6, lane 602a can be empty, though this is purely an example and lane 602a is not so limited.

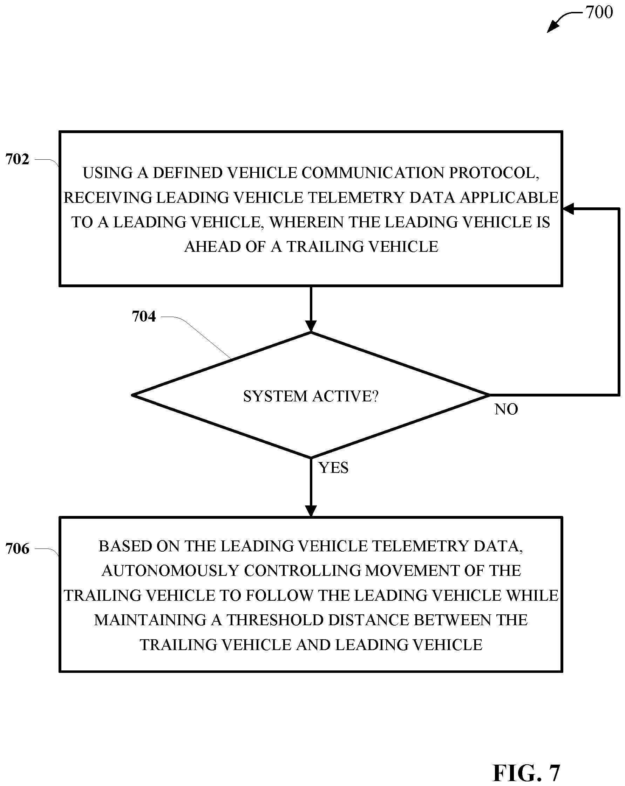

FIG. 7 illustrates a block flow diagram for a process 700 associated with autonomous traffic navigation optimization in accordance with one or more embodiments described herein. At 702, the process 700 can comprise, using a defined vehicle communication protocol, receiving (e.g., via a communication component 202) leading vehicle telemetry data applicable to a leading vehicle, wherein the leading vehicle is ahead of a trailing vehicle. At 704, if the corresponding autonomous traffic navigation optimization system (e.g., onboard vehicle system 104) is active (e.g., YES at 704), the process can proceed to 706. If at 704, the autonomous traffic navigation optimization system is not active (e.g., NO at 704), the process can return to 702. At 706, the process 700 can comprise, based on the leading vehicle telemetry data, autonomously controlling (e.g., via the autonomous driving component 204) movement of the trailing vehicle to follow the leading vehicle while maintaining a threshold distance between the trailing vehicle and leading vehicle.

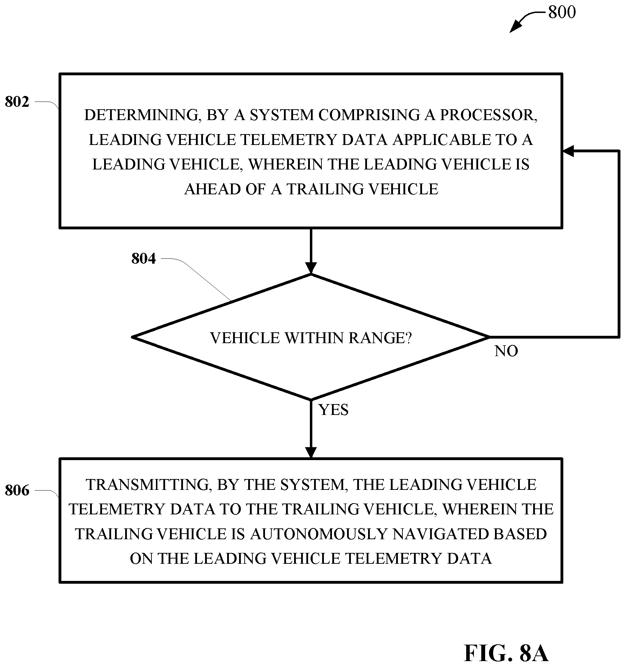

FIG. 8A illustrates a block flow diagram for a process 800 associated with autonomous traffic navigation optimization in accordance with one or more embodiments described herein. At 802, the process 800 can comprise, determining (e.g., via the telemetry data component 210), by a system comprising a processor, leading vehicle telemetry data applicable to a leading vehicle, wherein the leading vehicle is ahead of a trailing vehicle. At 804, if the trailing vehicle is within a defined range of the leading vehicle (e.g., YES at 804), the process can proceed to 806. If at 804, the trailing vehicle is not within the defined range of the leading vehicle (e.g., NO at 804), the process can return to 802. At 806, the process 800 can comprise transmitting (e.g., via the communication component 202), by the system, the leading vehicle telemetry data to the trailing vehicle, wherein the trailing vehicle is autonomously navigated based on the leading vehicle telemetry data.

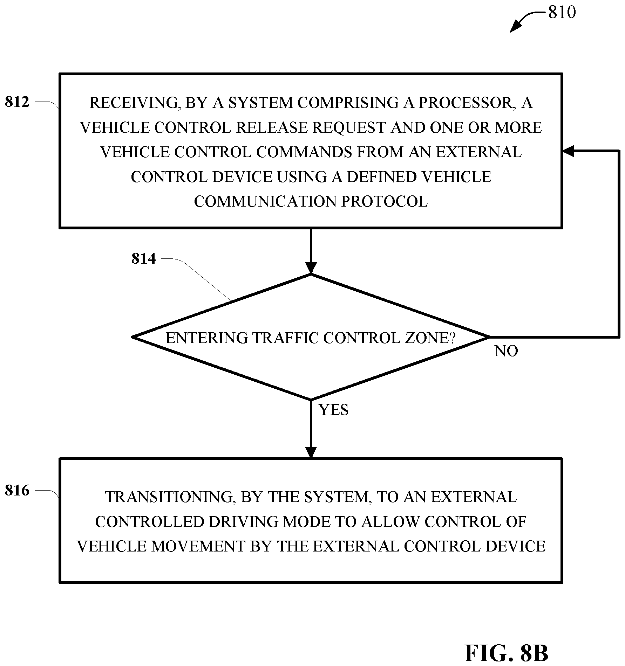

FIG. 8B illustrates a block flow diagram for a process 810 associated with autonomous traffic navigation optimization in accordance with one or more embodiments described herein. At 812, the process 810 can comprise, receiving, by the system comprising a processor, a vehicle control release request and one or more vehicle control commands from an external control device using a defined vehicle communication protocol. At 814, if the vehicle is entering a traffic control zone (e.g., YES at 814), the process can proceed to 816. If at 814, the trailing vehicle is not within the defined range of the leading vehicle (e.g., NO at 814), the process can return to 812. At 816, the process 810 can comprise transitioning, by the system, to an external controlled driving mode to allow control of vehicle movement by the external control device.

Systems described herein can be coupled (e.g., communicatively, electrically, operatively, optically, inductively, acoustically, etc.) to one or more local or remote (e.g., external) systems, sources, and/or devices (e.g., electronic control systems (ECU), classical and/or quantum computing devices, communication devices, etc.). For example, system 100 (or other systems, controllers, processors, etc.) can be coupled (e.g., communicatively, electrically, operatively, optically, etc.) to one or more local or remote (e.g., external) systems, sources, and/or devices using a data cable (e.g., High-Definition Multimedia Interface (HDMI), recommended standard (RS), Ethernet cable, etc.) and/or one or more wired networks described below.

In some embodiments, systems herein can be coupled (e.g., communicatively, electrically, operatively, optically, inductively, acoustically, etc.) to one or more local or remote (e.g., external) systems, sources, and/or devices (e.g., electronic control units (ECU), classical and/or quantum computing devices, communication devices, etc.) via a network. In these embodiments, such a network can comprise one or more wired and/or wireless networks, including, but not limited to, a cellular network, a wide area network (WAN) (e.g., the Internet), and/or a local area network (LAN). For example, system 100 can communicate with one or more local or remote (e.g., external) systems, sources, and/or devices, for instance, computing devices using such a network, which can comprise virtually any desired wired or wireless technology, including but not limited to: powerline ethernet, VHF, UHF, AM, wireless fidelity (Wi-Fi), BLUETOOTH^{®}, fiber optic communications, global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra-mobile broadband (UMB), high speed packet access (HSPA), Zigbee and other 802.XX wireless technologies and/or legacy telecommunication technologies, Session Initiation Protocol (SIP), ZIGBEE^{®}, RF4CE protocol, WirelessHART protocol, L-band voice or data information, 6LoWPAN (IPv6 over Low power Wireless Area Networks), Z-Wave, an ANT, an ultra-wideband (UWB) standard protocol, and/or other proprietary and non-proprietary communication protocols. In this example, system 100 can thus include hardware (e.g., a central processing unit (CPU), a transceiver, a decoder, an antenna (e.g., a ultra-wideband (UWB) antenna, a BLUETOOTH^{®} low energy (BLE) antenna, etc.), quantum hardware, a quantum processor, etc.), software (e.g., a set of threads, a set of processes, software in execution, quantum pulse schedule, quantum circuit, quantum gates, etc.), or a combination of hardware and software that facilitates communicating information between a system herein and remote (e.g., external) systems, sources, and/or devices (e.g., computing and/or communication devices such as, for instance, a smart phone, a smart watch, wireless earbuds, etc.).

Systems herein can comprise one or more computer and/or machine readable, writable, and/or executable components and/or instructions that, when executed by processor (e.g., a processing unit 116 which can comprise a classical processor, a quantum processor, etc.), can facilitate performance of operations defined by such component(s) and/or instruction(s). Further, in numerous embodiments, any component associated with a system herein, as described herein with or without reference to the various figures of the subject disclosure, can comprise one or more computer and/or machine readable, writable, and/or executable components and/or instructions that, when executed by a processor, can facilitate performance of operations defined by such component(s) and/or instruction(s). Consequently, according to numerous embodiments, system herein and/or any components associated therewith as disclosed herein, can employ a processor (e.g., processing unit 116) to execute such computer and/or machine readable, writable, and/or executable component(s) and/or instruction(s) to facilitate performance of one or more operations described herein with reference to system herein and/or any such components associated therewith.

Systems herein can comprise any type of system, device, machine, apparatus, component, and/or instrument that comprises a processor and/or that can communicate with one or more local or remote electronic systems and/or one or more local or remote devices via a wired and/or wireless network. All such embodiments are envisioned. For example, a system (e.g., a system 100 or any other system or device described herein) can comprise a computing device, a general-purpose computer, field-programmable gate array, AI accelerator application-specific integrated circuit, a special-purpose computer, an onboard computing device, a communication device, an onboard communication device, a server device, a quantum computing device (e.g., a quantum computer), a tablet computing device, a handheld device, a server class computing machine and/or database, a laptop computer, a notebook computer, a desktop computer, wearable device, internet of things device, a cell phone, a smart phone, a consumer appliance and/or instrumentation, an industrial and/or commercial device, a digital assistant, a multimedia Internet enabled phone, a multimedia players, and/or another type of device.

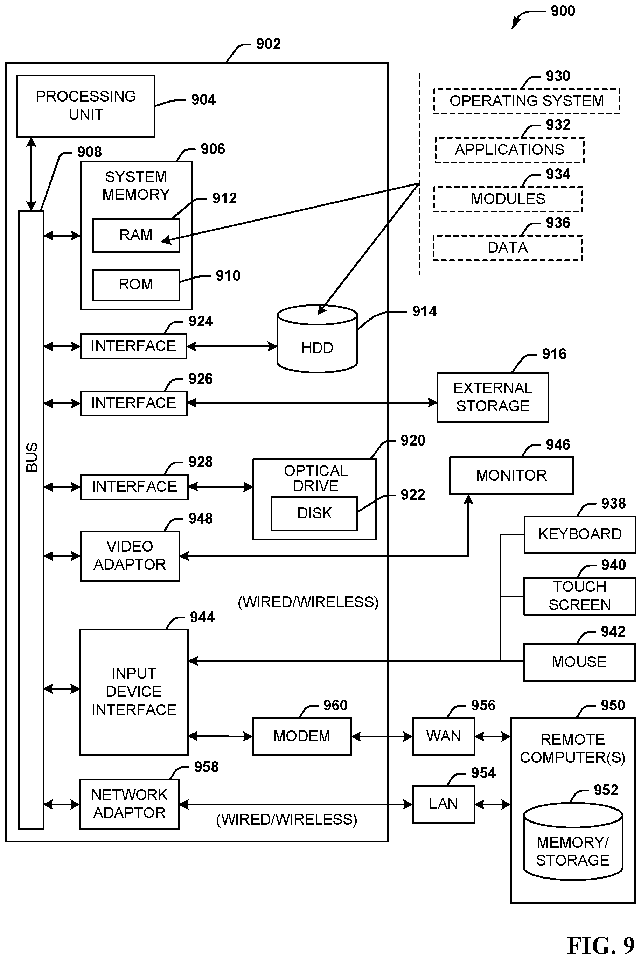

In order to provide additional context for various embodiments described herein, FIG. 9 and the following discussion are intended to provide a brief, general description of a suitable computing environment 900 in which the various embodiments of the embodiment described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the various methods can be practiced with other computer system configurations, including single-processor or multiprocessor computer systems, minicomputers, mainframe computers, Internet of Things (IoT) devices, distributed computing systems, as well as personal computers (e.g., ruggedized personal computers), field-programmable gate arrays, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data, or unstructured data.

Computer-readable storage media can include, but are not limited to, random access memory (RAM), read only memory (ROM), electrically erasable programmable read only memory (EEPROM), flash memory or other memory technology, compact disk read only memory (CD ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory, or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries, or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, optic, infrared, and other wireless media.

With reference again to FIG. 9, the example environment 900 for implementing various embodiments of the aspects described herein includes a computer 902, the computer 902 including a processing unit 904, a system memory 906 and a system bus 908. The system bus 908 couples system components including, but not limited to, the system memory 906 to the processing unit 904. The processing unit 904 can be any of various commercially available processors, field-programmable gate array, AI accelerator application-specific integrated circuit, or other suitable processors. Dual microprocessors and other multi-processor architectures can also be employed as the processing unit 904.

The system bus 908 can be any of several types of bus structure that can further interconnect to a memory bus (with or without a memory controller), a peripheral bus, and a local bus using any of a variety of commercially available bus architectures. The system memory 906 includes ROM 910 and RAM 912. A basic input/output system (BIOS) can be stored in a nonvolatile memory such as ROM, erasable programmable read only memory (EPROM), EEPROM, which BIOS contains the basic routines that help to transfer information between elements within the computer 902, such as during startup. The RAM 912 can also include a high-speed RAM such as static RAM for caching data. It is noted that unified Extensible Firmware Interface(s) can be utilized herein.

The computer 902 further includes an internal hard disk drive (HDD) 914 (e.g., EIDE, SATA), one or more external storage devices 916 (e.g., a magnetic floppy disk drive (FDD) 916, a memory stick or flash drive reader, a memory card reader, etc.) and an optical disk drive 920 (e.g., which can read or write from a disc 922 such as a CD-ROM disc, a DVD, a BD, etc.). While the internal HDD 914 is illustrated as located within the computer 902, the internal HDD 914 can also be configured for external use in a suitable chassis (not shown). Additionally, while not shown in environment 900, a solid-state drive (SSD) could be used in addition to, or in place of, an HDD 914. The HDD 914, external storage device(s) 916 and optical disk drive 920 can be connected to the system bus 908 by an HDD interface 924, an external storage interface 926 and an optical drive interface 928, respectively. The interface 924 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 902, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 912, including an operating system 930, one or more application programs 932, other program modules 934 and program data 936. All or portions of the operating system, applications, modules, and/or data can also be cached in the RAM 912. The systems and methods described herein can be implemented utilizing various commercially available operating systems or combinations of operating systems.

Computer 902 can optionally comprise emulation technologies. For example, a hypervisor (not shown) or other intermediary can emulate a hardware environment for operating system 930, and the emulated hardware can optionally be different from the hardware illustrated in FIG. 9. In such an embodiment, operating system 930 can comprise one virtual machine (VM) of multiple VMs hosted at computer 902. Furthermore, operating system 930 can provide runtime environments, such as the Java runtime environment or the .NET framework, for applications 932. Runtime environments are consistent execution environments that allow applications 932 to run on any operating system that includes the runtime environment. Similarly, operating system 930 can support containers, and applications 932 can be in the form of containers, which are lightweight, standalone, executable packages of software that include, e.g., code, runtime, system tools, system libraries and settings for an application.

Further, computer 902 can be enabled with a security module, such as a trusted processing module (TPM). For instance, with a TPM, boot components hash next in time boot components, and wait for a match of results to secured values, before loading a next boot component. This process can take place at any layer in the code execution stack of computer 902, e.g., applied at the application execution level or at the operating system (OS) kernel level, thereby enabling security at any level of code execution.

A user can enter commands and information into the computer 902 through one or more wired/wireless input devices, e.g., a keyboard 938, a touch screen 940, and a pointing device, such as a mouse 942. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 904 through an input device interface 944 that can be coupled to the system bus 908, but can be connected by other interfaces, such as a parallel port, an IEEE 1394 serial port, a game port, a USB port, an IR interface, a BLUETOOTH^{®} interface, etc.

A monitor 946 or other type of display device can be also connected to the system bus 908 via an interface, such as a video adapter 948. In addition to the monitor 946, a computer typically includes other peripheral output devices (not shown), such as speakers, printers, etc.

The computer 902 can operate in a networked environment using logical connections via wired and/or wireless communications to one or more remote computers, such as a remote computer(s) 950. The remote computer(s) 950 can be a workstation, a server computer, a router, a personal computer, portable computer, microprocessor-based entertainment appliance, a peer device or other common network node, and typically includes many or all of the elements described relative to the computer 902, although, for purposes of brevity, only a memory/storage device 952 is illustrated. The logical connections depicted include wired/wireless connectivity to a local area network (LAN) 954 and/or larger networks, e.g., a wide area network (WAN) 956. Such LAN and WAN networking environments are commonplace in offices and companies, and facilitate enterprise-wide computer networks, such as intranets, all of which can connect to a global communications network, e.g., the Internet.

When used in a LAN networking environment, the computer 902 can be connected to the local network 954 through a wired and/or wireless communication network interface or adapter 958. The adapter 958 can facilitate wired or wireless communication to the LAN 954, which can also include a wireless access point (AP) disposed thereon for communicating with the adapter 958 in a wireless mode.

When used in a WAN networking environment, the computer 902 can include a modem 960 or can be connected to a communications server on the WAN 956 via other means for establishing communications over the WAN 956, such as by way of the Internet. The modem 960, which can be internal or external and a wired or wireless device, can be connected to the system bus 908 via the input device interface 944. In a networked environment, program modules depicted relative to the computer 902 or portions thereof, can be stored in the remote memory/storage device 952. It will be appreciated that the network connections shown are example and other means of establishing a communications link between the computers can be used.

When used in either a LAN or WAN networking environment, the computer 902 can access cloud storage systems or other network-based storage systems in addition to, or in place of, external storage devices 916 as described above. Generally, a connection between the computer 902 and a cloud storage system can be established over a LAN 954 or WAN 956 e.g., by the adapter 958 or modem 960, respectively. Upon connecting the computer 902 to an associated cloud storage system, the external storage interface 926 can, with the aid of the adapter 958 and/or modem 960, manage storage provided by the cloud storage system as it would other types of external storage. For instance, the external storage interface 926 can be configured to provide access to cloud storage sources as if those sources were physically connected to the computer 902.

The computer 902 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

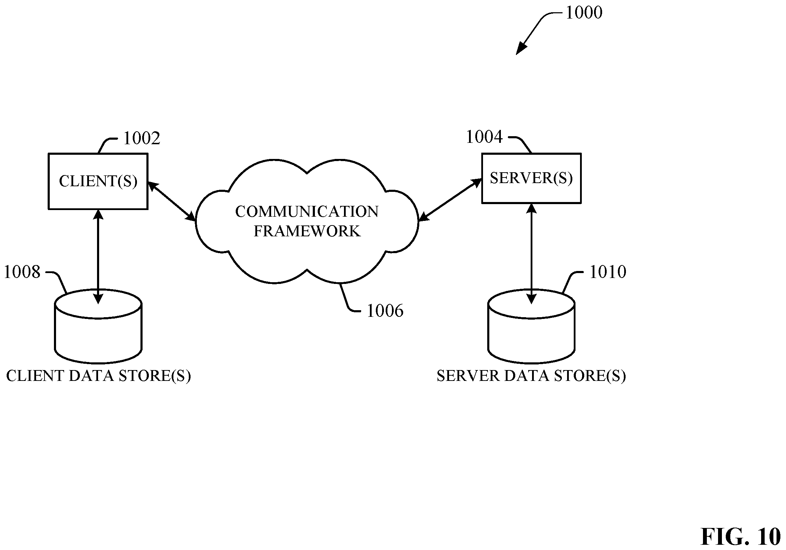

Referring now to FIG. 10, there is illustrated a schematic block diagram of a computing environment 1000 in accordance with this specification. The system 1000 includes one or more client(s) 1002, (e.g., computers, smart phones, tablets, cameras, PDA's). The client(s) 1002 can be hardware and/or software (e.g., threads, processes, computing devices). The client(s) 1002 can house cookie(s) and/or associated contextual information by employing the specification, for example.

The system 1000 also includes one or more server(s) 1004. The server(s) 1004 can also be hardware or hardware in combination with software (e.g., threads, processes, computing devices). The servers 1004 can house threads to perform transformations of media items by employing aspects of this disclosure, for example. One possible communication between a client 1002 and a server 1004 can be in the form of a data packet adapted to be transmitted between two or more computer processes wherein data packets may include coded analyzed headspaces and/or input. The data packet can include a cookie and/or associated contextual information, for example. The system 1000 includes a communication framework 1006 (e.g., a global communication network such as the Internet) that can be employed to facilitate communications between the client(s) 1002 and the server(s) 1004.

Communications can be facilitated via a wired (including optical fiber) and/or wireless technology. The client(s) 1002 are operatively connected to one or more client data store(s) 1008 that can be employed to store information local to the client(s) 1002 (e.g., cookie(s) and/or associated contextual information). Similarly, the server(s) 1004 are operatively connected to one or more server data store(s) 1010 that can be employed to store information local to the servers 1004. Further, the client(s) 1002 can be operatively connected to one or more server data store(s) 1010.

In one exemplary implementation, a client 1002 can transfer an encoded file, (e.g., encoded media item), to server 1004. Server 1004 can store the file, decode the file, or transmit the file to another client 1002. It is noted that a client 1002 can also transfer uncompressed file to a server 1004 and server 1004 can compress the file and/or transform the file in accordance with this disclosure. Likewise, server 1004 can encode information and transmit the information via communication framework 1006 to one or more clients 1002.

The illustrated aspects of the disclosure can also be practiced in distributed computing environments where certain tasks are performed by remote processing devices that are linked through a communications network. In a distributed computing environment, program modules can be located in both local and remote memory storage devices.

The above description includes non-limiting examples of the various embodiments. It is, of course, not possible to describe every conceivable combination of components or methods for purposes of describing the disclosed subject matter, and one skilled in the art can recognize that further combinations and permutations of the various embodiments are possible. The disclosed subject matter is intended to embrace all such alterations, modifications, and variations that fall within the spirit and scope of the appended claims.

With regard to the various functions performed by the above-described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature can be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Further aspects of the invention are provided by the subject matter of the following clauses:
1. A system, comprising: a memory that stores computer executable components; and a processor that executes the computer executable components stored in the memory, wherein the computer executable components comprise: a communication component that, using a defined vehicle communication protocol, receives a vehicle control release request and one or more vehicle control commands from an external control device upon entering a traffic control zone; and an autonomous driving component that, based vehicle control release request received, initiates transition to an external controlled driving mode to allow control of vehicle movement by the external control device.
2. The system of any preceding clause, further comprising: an external controlled driving component that, extracts the one or more vehicle control commands from the vehicle communication protocol, executes the one or more vehicle control commands.
3. The system any preceding clause, wherein the communication component transmits an indication of transition to the external controlled mode and periodically monitors for the one or more vehicle control commands.
4. The system any preceding clause, wherein the one or more vehicle control commands comprises a forward movement command to move the vehicle at a first speed.
5. The system any preceding clause, wherein the one or more vehicle control commands comprises a request to reduce movement command.
6. The system any preceding clause, wherein the one or more vehicle control commands comprises a steering movement command to adjust vehicle trajectory.
7. The system any preceding clause, wherein the communication component receives a vehicle sensor data transmission request.
8. The system any preceding clause, wherein the communication component transmits plurality of vehicle sensor data to the external device.
9. The system any preceding clause, wherein the communication component receives a vehicle-to-vehicle connection request.
10. The system any preceding clause, wherein communication component establishes a vehicle-to-vehicle connection using a vehicle-to-vehicle protocol.
   Any suitable combination of subsets of respective clauses 1-10 can be implemented.
11. A non-transitory machine-readable medium, comprising executable instructions that, when executed by a processor, facilitate performance of operations, comprising: receiving a vehicle control release request and one or more vehicle control commands from an external control device using a defined vehicle communication protocol, upon entering a traffic control zone; and transitioning to an external controlled driving mode to allow control of vehicle movement by the external control device.
12. The non-transitory machine-readable medium any preceding clause, further comprising: extracting the one or more vehicle control commands from the vehicle communication protocol, executes the one or more vehicle control commands.
13. The non-transitory machine-readable medium any preceding clause, further comprising: transmitting an indication of transition to the external controlled mode and periodically monitors for the one or more vehicle control commands.
14. The non-transitory machine-readable medium any preceding clause, wherein the one or more vehicle control commands comprises a forward movement command to move the vehicle at a first speed and a request to reduce movement command.
15. The non-transitory machine-readable medium any preceding clause, further comprising: establishing a vehicle-to-vehicle connection using a vehicle-to-vehicle protocol.
   Any suitable combination of subsets of respective clauses 11-15 can be implemented.
16. A method, comprising: receiving, by a system comprising a processor, a vehicle control release request and one or more vehicle control commands from an external control device using a defined vehicle communication protocol, upon entering a traffic control zone; and transitioning, by the system, to an external controlled driving mode to allow control of vehicle movement by the external control device.
17. The method of claim 16, further comprising: extracting, by the system, the one or more vehicle control commands from the vehicle communication protocol, executes the one or more vehicle control commands.
18. The method of claim 17, further comprising: transmitting, by the system, an indication of transition to the external controlled mode and periodically monitors for the one or more vehicle control commands.
19. The method of claim 17, further comprising: establishing, by the system, a vehicle-to-vehicle connection using a vehicle-to-vehicle protocol.
20. The method of claim 16, further comprising: receiving, by the system, a vehicle sensor data transmission request; transmitting, by the system, plurality of vehicle sensor data to the external device; and receiving, by the system, a vehicle-to-vehicle connection request.
23. The method of clause 16 above with any set of combinations of the methods 17-23 above.

Any suitable combination of subsets of respective clauses 1-23 can be implemented.

## Claims

1. A system, comprising:
a memory that stores computer executable components; and
a processor that executes the computer executable components stored in the memory, wherein the computer executable components comprise:
a communication component that, using a defined vehicle communication protocol, receives a vehicle control release request and one or more vehicle control commands from an external control device upon entering a traffic control zone; and
an autonomous driving component that, based vehicle control release request received, initiates transition to an external controlled driving mode to allow control of vehicle movement by the external control device.

2. The system of claim 1, further comprising:
an external controlled driving component that, extracts the one or more vehicle control commands from the vehicle communication protocol, executes the one or more vehicle control commands.

3. The system of claim 2, wherein the communication component transmits an indication of transition to the external controlled mode and periodically monitors for the one or more vehicle control commands.

4. The system of claim 2, wherein the one or more vehicle control commands comprises a forward movement command to move the vehicle at a first speed.

5. The system of claim 2, wherein the one or more vehicle control commands comprises a request to reduce movement command.

6. The system of claim 2, wherein the one or more vehicle control commands comprises a steering movement command to adjust vehicle trajectory.

7. The system of claim 2, wherein the communication component receives a vehicle sensor data transmission request.

8. The system of claim 7, wherein the communication component transmits plurality of vehicle sensor data to the external device.

9. The system of claim 2, wherein the communication component receives a vehicle-to-vehicle connection request.

10. The system of claim 2, wherein communication component establishes a vehicle-to-vehicle connection using a vehicle-to-vehicle protocol.

11. A non-transitory machine-readable medium, comprising executable instructions that, when executed by a processor, facilitate performance of operations, comprising:
receiving a vehicle control release request and one or more vehicle control commands from an external control device using a defined vehicle communication protocol, upon entering a traffic control zone; and
transitioning to an external controlled driving mode to allow control of vehicle movement by the external control device.

12. The non-transitory machine-readable medium of claim 11, wherein the one or more vehicle control commands comprises a forward movement command to move the vehicle at a first speed and a request to reduce movement command.

13. The non-transitory machine-readable medium of claim 11, further comprising:
establishing a vehicle-to-vehicle connection using a vehicle-to-vehicle protocol.

14. A method, comprising:
receiving, by a system comprising a processor, a vehicle control release request and one or more vehicle control commands from an external control device using a defined vehicle communication protocol, upon entering a traffic control zone; and
transitioning, by the system, to an external controlled driving mode to allow control of vehicle movement by the external control device.

15. The method of claim 14, further comprising:
receiving, by the system, a vehicle sensor data transmission request;
transmitting, by the system, plurality of vehicle sensor data to the external device; and
receiving, by the system, a vehicle-to-vehicle connection request.
